# EUROPÄISCHE PATENTANMELDUNG

(11) **EP 2 143 963 A1**
(43) Veröffentlichungstag der Anmeldung: **13.01.2010**
(21) Anmeldenummer: 08012648.5
(22) Anmeldetag: 12.07.2008
(51) Int. Cl.: F16B 35/04

(54) **Bohrschraube**

(71) Anmelder: MAGE AG, 1791 Courtaman (CH)
(72) Erfinder: Sponer, Wolfgang, 1230 Wien (AT)
(74) Vertreter: Kohler Schmid Möbus

(57) **Zusammenfassung**

Vorgeschlagen wird eine Bohrschraube 1 mit einem sich an einen Schraubenkopf 2 anschließenden Schaft 3, der einen Gewindeabschnitt 4 aufweist, und einer Bohrspitze 10 am schraubenkopffernen Ende des Schaftes 3.

Dabei weist der Gewindeabschnitt 4 ein zum Aufschrauben einer Schraubenmutter 6 geeignetes Gewinde auf.

## Beschreibung

Die Erfindung betrifft eine Bohrschraube mit einem sich an einen Schraubenkopf anschließenden Schaft, der einen Gewindeabschnitt aufweist, und einer Bohrspitze am schraubenkopffernen Ende des Schaftes.

Bohrschrauben werden zur Befestigung eines zu befestigenden Bauteiles an einem Gegenstand verwendet. Dabei muss kein Bohrloch zum Einbringen der Bohrschraube vorgebohrt werden, da die Bohrschraube mittels ihrer Bohrspitze selbst dazu geeignet ist, beim Einschrauben ein Bohrloch in das Material, in das sie eingeschraubt wird, einzubringen. Die Schraube oder nur die Bohrspitze ist dabei üblicherweise aus einem gehärteten Stahl hergestellt. Die Bohrspitze weist mindestens eine Schneidkante auf und hat häufig zum Ausfördern von durch das Einbohren zerspantem Material in Längsachsenrichtung der Bohrschraube verlaufende Einkerbungen. Der Gewindeabschnitt des Schaftes weist dabei ein Selbstschneidegewinde auf, so dass die Bohrschraube beim Einschrauben ein Gewinde in das Material einschneidet, das zur Befestigung der Bohrschraube in dem Material dient. Derartige Selbstschneidegewinde weisen einen steilen Steigungswinkel der Steigung des Gewindes von üblicherweise über 10 Grad und steile Flankenwinkel der Gewindegänge des Gewindes von unter 55 Grad auf. Selbstschneidegewinde sind daher nicht zum Aufschrauben einer Schraubenmutter geeignet.

Unterschreitet die Materialstärke des Materials, in das die Bohrschraube eingeschraubt wird, z. B. 2-3 mm, so nimmt die Belastbarkeit der Befestigung der Bohrschraube in dem Material ab, da lediglich ein Teilbereich der axialen Länge des Gewindeabschnittes über das eingeschnittene Gewinde mit dem Material zum Eingriff kommt. Bei Verwendung von Bohrschrauben zum Einschrauben in dünne Bleche widersteht die eingeschraubte Bohrschraube deshalb nur sehr geringen Auszugskräften.

Der Erfindung liegt die Aufgabe zugrunde, eine Bohrschraube bereitzustellen, welche die Nachteile des Standes der Technik vermeidet, wobei insbesondere eine sichere Befestigung in Gegenständen geringer Materialstärke möglich sein soll.

Diese Aufgabe wird durch die Gegenstände der Patentansprüche gelöst. Die abhängigen Ansprüche stellen bevorzugte Ausführungsformen der Erfindung dar.

Eine erfindungsgemäße Bohrschraube weist einen sich an einen Schraubenkopf anschließenden Schaft mit einem Gewindeabschnitt oder einem Gewinde und einer Bohrspitze am schraubenkopffernen Ende des Schaftes auf. Erfindungsgemäß weist der Gewindeabschnitt oder das Gewinde, d.h. die Länge des Schaftes, die ein Gewinde aufweist, ein zum Aufschrauben einer Schraubenmutter geeignetes Gewinde auf. Ein derartiges Gewinde wird üblicherweise auch als natürliches Gewinde bezeichnet.

Ein derartiges natürliches Gewinde hat auf der Gesamtlänge des Gewindeabschnittes einen konstanten Innen- und Außendurchmesser. Es kann sich dabei um ein Gewinde mit einer beliebigen natürlichen Gewindeform, z.B. ein metrisches, trapezförmiges oder Whitworth-Gewinde, handeln.

Die erfindungsgemäße Bohrschraube kann wie bekannte Bohrschrauben ohne ein Bohrloch vorzubohren in bzw. durch einen Gegenstand geringer Materialstärke, z. B. ein Blech, ein- bzw. durchgeschraubt werden. Nach dem Einschrauben kann eine als Kontermutter Verwendung findende Schraubenmutter auf das Gewinde aufgeschraubt werden. Dabei können Unterlegscheiben Verwendung finden. Die erfindungsgemäße Bohrschraube wird so fest an den Gegenstand, durch den sie durchgeschraubt ist, festgeschraubt. Es wird so eine sehr große Stabilität der Einschraubung gegen Auszugskräfte erreicht. Ein Ausziehen der derart mit einer Schraubenmutter festgeschraubten erfindungsgemäßen Bohrschraube ist nur unter Ausbrechen des Materials, in dem die Bohrschraube befestigt ist, möglich.

Vorteilhaft liegt der Außendurchmesserwert der Bohrspitze zwischen dem Innendurchmesserwert und dem Außendurchmesserwert des Gewindes der Bohrschraube. Da der Außendurchmesser des Gewindes dann größer als der Durchmesser des mittels der Bohrspitze ausgebohrten Bohrloches (Bohrdurchmesser) ist, wird das Gewinde beim Einschrauben der Bohrschraube in dem Material eine Abformung eines Gegengewindes ausbilden, was zu einer zusätzlichen Stabilisierung der Befestigung der erfindungsgemäßen Bohrschraube führt. Der Außendurchmesser des Gewindes sollte dabei derart bemessen sein, dass das Gewinde beim Einschrauben kein übermäßiges Gewindeformmoment erzeugt, d.h. dass das Gewinde der erfindungsgemäßen Bohrschraube nicht beschädigt wird.

Auf den Gewindeabschnitt einer erfindungsgemäßen Bohrschraube kann also eine Schraubenmutter aufgeschraubt sein, d.h. es kann eine Schraubenmutter darauf laufen. Das Gewinde der Schraubenmutter greift in Gewinde der Bohrschraube derart ein, dass ein Kontern möglich ist, d.h. die Mutter nicht durchdreht.

Dazu ist der Innendurchmesserwert der Schraubenmutter größer als der Außendurchmesserwert der Bohrspitze, d.h. die Schraubenmutter kann über die Bohrspitze der Bohrschraube geschoben werden, und kleiner als der Außendurchmesserwert des Gewindes, was das Kontern ermöglicht. Der Innendurchmesser ist dann also so klein, dass ein Vorspannmoment beim Festschrauben der Schraubenmutter auf der erfindungsgemäßen Bohrspitze erzeugt werden kann.

Bevorzugt weist die Bohrspitze mindestens eine in Längsachsenrichtung der Bohrschraube verlaufende Einkerbung und/oder mindestens eine, bevorzugt zwei, Schneidkanten am freien Ende auf. Derartig ausgestaltete Bohrspitzen ermöglichen ein leichtes Einbohren der erfindungsgemäßen Bohrschraube ohne Vorbohren durch einen Bohrer. Mittels der Schneidkanten wird das Material in das die Bohrschraube eingeschraubt wird zerspant.

Der Steigungswinkel α der Steigung des Gewindes der Bohrschraube beträgt bevorzugt weniger als 10° und/oder ein Flankenwinkel β der Gewindegänge des Gewindes der Bohrschraube beträgt bevorzugt zwischen 55° und 65°, bevorzugt 60°. Dadurch wird ein Ausbilden eines Gegengewindes im Material, in das die erfindungsgemäße Bohrschraube eingeschraubt wird, ermöglicht und ein sicheres Kontern einer auf den Gewindeabschnitt der erfindungsgemäßen Bohrschraube aufgeschraubten Schraubenmutter gewährleistet.

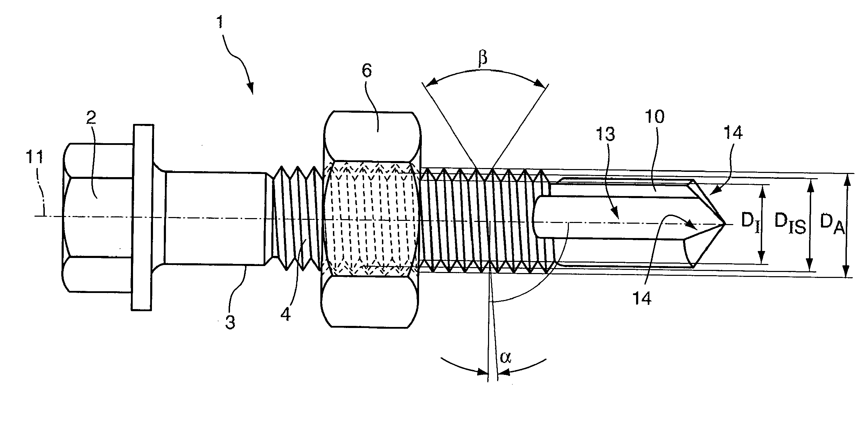

Die Erfindung wird nachfolgend anhand eines Ausführungsbeispiels unter Bezugnahme auf die Zeichnung näher erläutert.

Die Darstellungen der Zeichnung zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

In der Figur ist eine erfindungsgemäße Bohrschraube 1 mit einem sich an einen beispielsweise als Sechskantkopf ausgeprägten Schraubenkopf 2 anschließenden Schaft 3, der einen Gewindeabschnitt 4 aufweist, und einer auf das Gewinde des Gewindeabschnittes 4 aufgeschraubten beispielsweise als Sechskantmutter ausgeprägten Schraubenmutter 6 dargestellt.

Der Gewindeabschnitt 4, d.h. die Länge des Schaftes 3, die ein Gewinde aufweist, ist also mit einem zum Aufschrauben einer Schraubenmutter 6 geeigneten Gewinde versehen. Dazu hat das Gewinde einen auf der Gesamtlänge des Gewindeabschnittes 4 konstanten Innen Außendurchmesser D_{I} und Außendurchmesser D_{A}.

An das schraubenkopfferne Ende des Schaftes 4 schließt sich eine Bohrspitze 10 an, über die die Schraubenmutter 6 vor dem Aufschrauben auf das Gewinde der Bohrschraube 1 geschoben wurde. Die Bohrspitze 10 weist auf ihrer gesamten Länge kein Gewinde auf. Die Bohrspitze 10 weist symmetrisch zur Längsachse 11 der Bohrschraube 1 zwei in Längsachsenrichtung der Bohrschraube 1 verlaufende Einkerbungen 13 auf, wovon durch die Zeichnungsperspektive bedingt lediglich die sich im Vordergrund befindliche Einkerbung 13 gezeigt ist. Jede der Einkerbungen 13 bildet an ihrem freien Ende eine Schneidkante 14 aus.

Um ein Kontern, d.h. ein Vermeiden des Durchdrehens, der Schraubenmutter 6 auf dem Gewinde der Bohrschraube 1 zu ermöglichen, ist der Innendurchmesserwert D_{IS} der Schraubenmutter 6 kleiner als der Außendurchmesserwert D_{A} des Gewindes der Bohrschraube 1. Weiter ist der Innendurchmesserwert D_{IS} der Schraubenmutter 6 größer als der Außendurchmesserwert der Bohrspitze 10 um das Überschieben der Schraubenmutter 6 über die Bohrspitze 10 zu ermöglichen. Der Außendurchmesserwert der Bohrspitze 10 liegt zwischen dem Innendurchmesserwert D_{I} und dem Außendurchmesserwert D_{A} des Gewindes der Bohrschraube 1.

Der Steigungswinkel α der Steigung des Gewindes beträgt weniger als 10° und ein zwischen den Flanken benachbarter Gewindegänge des Gewindes der Bohrschraube ausgebildeter Flankenwinkel β der Gewindegänge des Gewindes beträgt ca. 60°.

Vorgeschlagen wird eine Bohrschraube 1 mit einem sich an einen Schraubenkopf 2 anschließenden Schaft 3, der einen Gewindeabschnitt 4 aufweist, und einer Bohrspitze 10 am schraubenkopffernen Ende des Schaftes 3.

Dabei weist der Gewindeabschnitt 4 ein zum Aufschrauben einer Schraubenmutter 6 geeignetes Gewinde auf.

Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung Gebrauch machen.

## Patentansprüche

1. Bohrschraube (1) mit
einem sich an einen Schraubenkopf (2) anschließenden Schaft (3), der einen Gewindeabschnitt (4) oder ein Gewinde über die gesamte Länge des Schafts (3) aufweist, und
einer Bohrspitze (10) am schraubenkopffernen Ende des Schaftes (3),
**dadurch gekennzeichnet, dass**
der Gewindeabschnitt (4) oder das Gewinde ein zum Aufschrauben einer Schraubenmutter (6) geeignetes Gewinde aufweist.

2. Bohrschraube nach Anspruch 1,
**dadurch gekennzeichnet, dass**
der Außendurchmesserwert der Bohrspitze (10) zwischen dem Innendurchmesserwert und dem Außendurchmesserwert des Gewindes liegt.

3. Bohrschraube nach einem der Ansprüche 1 bis 2,
**dadurch gekennzeichnet, dass**
auf den Gewindeabschnitt (4) oder das Gewinde eine Schraubenmutter (6) aufgeschraubt ist.

4. Bohrschraube nach Anspruch 3,
**dadurch gekennzeichnet, dass**
der Innendurchmesserwert der Schraubenmutter (6) größer als der Außendurchmesserwert der Bohrspitze (10) und kleiner als der Außendurchmesserwert des Gewindes der Bohrschraube (1) ist.

5. Bohrschraube nach einem der Ansprüche 1 bis 4,
**dadurch gekennzeichnet, dass**
die Bohrspitze (10) mindestens eine in Längsachsenrichtung der Bohrschraube verlaufende Einkerbung (13) und/oder mindestens eine, bevorzugt zwei, Schneidkanten (14) am freien Ende aufweist.

6. Bohrschraube nach einem der Ansprüche 1 bis 5,
**dadurch gekennzeichnet, dass**
der Steigungswinkel der Steigung des Gewindes der Bohrschraube weniger als 10° und/oder ein Flankenwinkel der Gewindegänge des Gewindes der Bohrschraube zwischen 40° und 65°, bevorzugt 60°, beträgt.

## Geänderte Patentansprüche

### Geänderte Patentansprüche gemäss Regel 137(2) EPÜ.

**1.** Bohrschraube (1) mit
einem sich an einen Schraubenkopf (2) anschließenden Schaft (3), der einen Gewindeabschnitt (4) oder ein Gewinde über die gesamte Länge des Schafts (3) aufweist,
wobei der Schraubenkopf (2) einen größeren radialen Durchmesser aufweist als der Schaft, und
einer Bohrspitze (10) am schraubenkopffernen Ende des Schaftes (3), der Gewindeabschnitt (4) oder das Gewinde ein zum Aufschrauben einer Schraubenmutter (6) geeignetes Gewinde aufweist, und wobei auf den Gewindeabschnitt (4) oder das Gewinde eine Schraubenmutter (6) als Kontermutter aufgeschraubt ist.

**2.** Bohrschraube nach Anspruch 1,
**dadurch gekennzeichnet, dass**
der Außendurchmesserwert der Bohrspitze (10) zwischen dem Innendurchmesserwert und dem Außendurchmesserwert des Gewindes liegt.

**3.** Bohrschraube nach Anspruch 1,
**dadurch gekennzeichnet, dass**
der Innendurchmesserwert der Schraubenmutter (6) größer als der Außendurchmesserwert der Bohrspitze (10) und kleiner als der Außendurchmesserwert des Gewindes der Bohrschraube (1) ist.

**4.** Bohrschraube nach einem der Ansprüche 1 bis 3,
**dadurch gekennzeichnet, dass**
die Bohrspitze (10) mindestens eine in Längsachsenrichtung der Bohrschraube verlaufende Einkerbung (13) und/oder mindestens eine, bevorzugt zwei, Schneidkanten (14) am freien Ende aufweist.

**5.** Bohrschraube nach einem der Ansprüche 1 bis 4,
**dadurch gekennzeichnet, dass**
der Steigungswinkel der Steigung des Gewindes der Bohrschraube weniger als 10° und/oder ein Flankenwinkel der Gewindegänge des Gewindes der Bohrschraube zwischen 40° und 65°, bevorzugt 60°, beträgt.
